(19) Europäisches Patentamt
European Patent Office
Office européen des brevets

(11) **EP 1 291 498 B1**

(12) **EUROPEAN PATENT SPECIFICATION**

(45) Date of publication and mention
of the grant of the patent:
**25.06.2008 Bulletin 2008/26**

(51) Int Cl.:
*F01N 3/20* (2006.01)

(21) Application number: **02020230.5**

(22) Date of filing: **10.09.2002**

(54) **Emission control system for internal combustion engine**

Abgasemissionssteuerungssystem für eine Brennkraftmaschine

Système de contrôle des émissions d'un moteur à combustion interne

(84) Designated Contracting States:
**DE ES FR GB IT**

(30) Priority: **11.09.2001 JP 2001275399**

(43) Date of publication of application:
**12.03.2003 Bulletin 2003/11**

(73) Proprietor: **Toyota Jidosha Kabushiki Kaisha Toyota-shi, Aichi-ken, 471-8571 (JP)**

(72) Inventors:
• **Ishiyama, Shinobu**
  **Toyota-shi,**
  **Aichi-ken, 471-8571 (JP)**
• **Ohki, Hisashi**
  **Toyota-shi,**
  **Aichi-ken, 471-8571 (JP)**
• **Hayashi, Kotaro**
  **Toyota-shi,**
  **Aichi-ken, 471-8571 (JP)**
• **Magarida, Naofumi**
  **Toyota-shi,**
  **Aichi-ken, 471-8571 (JP)**
• **Kobayashi, Masaaki**
  **Toyota-shi,**
  **Aichi-ken, 471-8571 (JP)**
• **Shibata, Daisuke**
  **Toyota-shi,**
  **Aichi-ken, 471-8571 (JP)**
• **Negami, Akihiko**
  **Toyota-shi,**
  **Aichi-ken, 471-8571 (JP)**
• **Tahara, Jun**
  **Toyota-shi,**
  **Aichi-ken, 471-8571 (JP)**

(74) Representative: **TBK-Patent**
  **Bavariaring 4-6**
  **80336 München (DE)**

(56) References cited:
EP-A- 0 586 913        EP-A- 0 822 323
EP-A- 0 864 732        WO-A-01/25601
WO-A-02/43840        WO-A-95/08703
WO-A-98/22209        US-A- 5 965 098

• **PATENT ABSTRACTS OF JAPAN vol. 018, no. 432 (M-1654), 11 August 1994 (1994-08-11) & JP 06 129239 A (TOYOTA MOTOR CORP), 10 May 1994 (1994-05-10)**

**Description**

BACKGROUND OF THE INVENTION

1. Field of Invention

The invention relates to an emission control system for internal combustion engines capable of performing lean-burn combustion, which system supplies a reducing agent to a portion of an exhaust system of the engine which is located upstream of a NOx catalyst disposed therein, thereby promoting removal or purification of harmful components contained in the exhaust gas.

2. Description of Related Art

A diesel engine or a gasoline engine capable of performing lean-burn combustion is operated in most of the total operating or driving region with an air-fuel mixture having a high air-fuel ratio (i.e., a fuel-lean atmosphere) being supplied for combustion. In the internal combustion engine of this type, a NOx absorbent (or NOx catalyst) capable of absorbing nitrogen oxides (NOx) in a fuel-lean atmosphere is generally provided in an exhaust system of the engine.
In general, the NOx catalyst has a property of absorbing NOx when the concentration of a reducing substance in the exhaust gas is low and of releasing NOx when the concentration of the reducing substance in the exhaust gas is high. If the reducing substance, such as hydrocarbon (HC) or carbon oxide (CO), is present in the exhaust gas, NOx which has been released from the NOx catalyst immediately reacts with the reducing substance, and is thereby reduced to nitrogen ($N_2$). Meanwhile, there is a limit to the quantity of NOx that can be trapped and stored in the NOx catalyst, and the limit quantity may be called "saturation quantity". If the NOx catalyst has absorbed NOx to the limit quantity, therefore, the catalyst stops absorbing any further NOx even if the concentration of the reducing substance in the exhaust gas is low.
In view of the above situation, an emission control system as disclosed in Japanese Patent No. 2845056 includes an addition value adapted for supplying a reducing agent to an exhaust system of an internal combustion engine. With the addition valve, the emission control system repeatedly perform control for adding the reducing agent into the exhaust gas flowing into a NOx catalyst at predetermined intervals before the quantity of NOx stored in the NOx catalyst reaches a predetermined level. When the emission control system supplies the reducing agent into the exhaust system via the addition valve as described above, the supplied reducing agent is sprayed or diffused into a mist and thereby increases the concentration of the reducing substance in the exhaust gas. As a result, NOx stored in the NOx catalyst (which will be referred to as "stored NOx") is released and the released NOx is then reduced and removed while at the same time the NOx storage capacity of the NOx catalyst is recovered.
As described above, by supplying the reducing agent into the exhaust system via the addition valve, the amount of the reducing substance in the exhaust gas flowing into the NOx catalyst can be increased as required at desired times, and therefore the exhaust gas purification efficiency of the NOx catalyst can be kept high constantly.
With an emission control system as disclosed in the above-identified publication, the reducing agent supplied into the exhaust system via the addition valve is transferred while being diffused in the form of a mist, and acts on the stored NOx when it passes through the NOx catalyst.
Also the prior art according to US 5 965 098 A discloses an emission control system for an internal combustion engine.
At this time, however, only a portion of the mist-like reducing agent that reaches the NOx catalyst contacts with a surface of the catalyst and substantially acts on the stored NOx. The rest of the reducing agent passes through the catalyst without reacting with the stored NOx, and is released as an excess portion to the downstream side of the catalyst. An oxidization catalyst may be provided downstream of the NOx catalyst for purifying (oxidizing) the excess portion of the reducing agent. However, it is difficult in fact to purify the excess reducing agent by the oxidization catalyst, since the exhaust gas into which the reducing agent is diffused does not contain a sufficiently large amount of oxygen (namely, the exhaust gas as a whole is a fuel-rich atmosphere).

SUMMARY OF THE INVENTION

It is therefore an object of the invention to provide an emission control system for an internal combustion engine, which permits an efficient use of an exhaust gas purification function of a NOx catalyst disposed in an exhaust system of the internal combustion engine.
To accomplish the above object, the invention according to claim 1 provides an emission control system for an internal combustion engine, including (a) a NOx catalyst disposed in an exhaust system of the internal combustion engine and having a property of promoting reactions for reducing NOx when a concentration of a reducing substance in an exhaust gas becomes high, and (b) reductant adding means for adding a reducing agent to the exhaust gas flowing into the NOx catalyst through the exhaust system. The emission control system includes control means for controlling the reductant adding means to add the reducing agent in the form of droplets to the exhaust gas.

The NOx catalyst has a property of absorbing NOx when the concentration of the reducing substance(s) in the exhaust gas is relatively low, and releasing NOx absorbed therein while promoting reducing reactions when the concentration of the reducing substance(s) in the exhaust gas is relatively high.

The reducing agent in the form of droplets consist of liquid particles having a particle size between 50 $\mu$m to 100 $\mu$m, and the liquid particles are dispersed in the form of a mist in the exhaust gas. The particle diameter of each of the particles constituting the reducing agent is controlled to a suitable size so that each particle that reaches the NOx catalyst is deposited on a surface of the catalyst in a rough state. The suitable particle size may differ depending upon the physical and chemical characteristics of the reducing agent used, the property and state of the exhaust gas, and the characteristics and state of the catalyst.

The emission control system constructed as described above controls diffusion of the reducing agent added to the exhaust gas so that the reducing agent forms a relatively thick mist (or a locally rich atmosphere) in the exhaust gas, which is then transferred to the NOx catalyst. The reducing agent that has been transferred to the NOx catalyst is relatively quickly deposited on the surface of the catalyst due to the relatively large diameter of the particles of the reducing agent, so as to reduce NOx stored in the catalyst. Namely, a major portion of the reducing agent added to the exhaust gas effectively acts on the NOx catalyst without merely passing through it. Thus, the emission control system requires a minimum amount of reducing agent for reducing an removing NOx, assuring highly efficient use of the reducing agent.

In addition, the emission control system as described above is able to form a local fuel-rich atmosphere in the exhaust gas, while maintaining the exhaust gas as a whole as a fuel-lean atmosphere (namely, keeping the air-fuel ratio of the exhaust gas lean). By providing an oxidation catalyst that promotes oxidation of the reducing agent under a fuel-lean atmosphere at a location downstream of the NOx catalyst, an excess portion of the reducing agent that has passed through the NOx catalyst can be removed or purified with high reliability.

It is preferable that the droplets of the reducing agent have a particle diameter of 50 $\mu$m. With the particle diameter thus controlled, the reducing agent added to the exhaust gas forms a local fuel-rich atmosphere, which is unlikely to be formed by the reducing agent consisting of small liquid particles having a diameter of less than 10 $\mu$m.

Preferably, the control means changes a particle diameter of the droplets of the reducing agent depending upon the midbed temperature of the NOx catalyst. In this case, the control means may increase the particle diameter of the droplets of the reducing agent as the temperature of the NOx catalyst increases.

The midbed temperature of the NOx catalyst as well as the particle diameter of the reducing agent in the form of droplets are dominant parameters that determine the likelihood of deposition of the droplets of the reducing agent on the surface of the catalyst. Namely, the reducing agent in the form of droplets is more likely to be deposited on the surface of the NOx catalyst as its particle diameter or size increases within a predetermined range, and the reducing agent is less likely to be physically deposited on the surface of the catalyst as the midbed temperature of the NOx catalyst increases. Thus, the optimum conditions are easily established for reducing and removing NOx with the minimum amount of the reducing agent applied to the NOx catalyst.

The control means may change the particle diameter of the droplets of the reducing agent depending upon the temperature of the exhaust gas as a dominant parameter that determines the likelihood of diffusion of the reducing agent in the exhaust gas, in addition to or in place of the particle diameter of the droplets of the reducing agent.

BRIEF DESCRIPTION OF THE DRAWINGS

The foregoing and/or further objects, features and advantages of the invention will become more apparent from the following description of preferred embodiments with reference to the accompanying drawings, in which like numerals are used to represent like elements and wherein:

Fig. 1 is a view schematically showing the structure of a diesel engine system including an emission control system according to a first embodiment of the invention;
Fig. 2 is a flowchart showing a routine of reductant addition control performed by the emission control system according to the first embodiment of the invention;
Fig. 3A and 3B are time charts showing changes in the air-fuel ratio with time when the reductant addition control is carried out, which air-fuel ratio is calculated based on an output signal of an air-fuel ratio sensor provided downstream of a catalyst;
Fig. 4 is a flowchart showing a routine of reductant addition control performed by an emission control system according to a second embodiment of the invention; and
Fig. 5 is a graph showing a relationship between the particle diameter of droplets of the reducing agent and the NOx purification efficiency .

### DETAILED DESCRIPTION OF PREFERRED EMBODIMENTS

First Embodiment

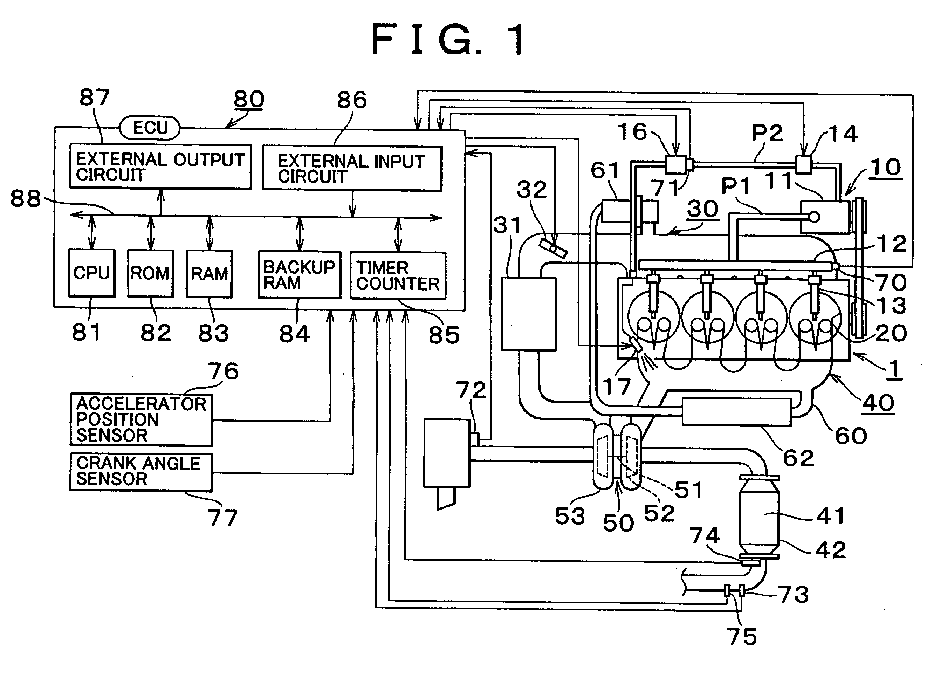

An emission control system for an internal combustion engine according to a first embodiment of the invention will be described in detail. In the first embodiment, the emission control system is used in a diesel engine system. An internal combustion engine (which will be referred to as "engine") 1 shown in Fig. 1 is in the form of an in-line four-cylinder diesel engine that includes a fuel supply system 10, combustion chambers 20, an intake system 30, an exhaust system 40 and so on, as its main components.

The fuel supply system 10 includes a supply pump 11, a common rail 12, fuel injection valves 13, a cut-off valve 14, a regulating valve 16, a reductant addition valve 17, an engine fuel passage P1, an addition fuel passage P2, and other components.

The supply pump 11 is adapted to highly pressurize fuel delivered from a fuel tank (not shown) and supply it to the common rail 12 via the engine fuel passage P1. The common rail 12 functions as an accumulator to maintain the high-pressure fuel supplied from the supply pump 11 at a predetermined high pressure, and distributes the accumulated fuel to the fuel injection valves 13. Each of the fuel injection valves 13 is an electromagnetic valve with an electromagnetic solenoid (not shown) provided therein, and is controlled to open as needed to inject the fuel into a corresponding one of the combustion chambers 20.

The supply pump 11 supplies a portion of the fuel from the fuel tank to the reductant addition valve 17 via the addition fuel passage P2. In the addition fuel passage P2, the cut-off valve 14 and the regulating valve 16 are arranged between the supply pump 11 and the reductant addition valve 17 such that the cut-off valve 14 is located closer to the supply pump 11 than the regulating valve 14. The cut-off valve 14 serves to cut off the addition fuel passage P2 to stop the fuel supply in an emergency. The regulating valve 16 is operated to control the pressure (fuel pressure) PG of the fuel to be supplied to the reductant addition valve 17. Like the fuel injection valves 13, the reductant addition valve 17 is an electromagnetic valve with an electromagnetic solenoid (not shown) provided therein, and is adapted to supply a suitable amount of fuel serving as a reductant or reducing agent into a portion of the exhaust system 40 upstream of a catalyst casing 42 at appropriate times.

The intake system 30 forms a passage (an intake passage) of the intake air to be supplied into each of the combustion chambers 20. On the other hand, the exhaust system 40 forms a passage (an exhaust passage) of the exhaust gas emitted from each combustion chamber 20.

Besides, the engine 1 is provided with a known supercharger (i.e., a turbocharger) 50. The turbocharger 50 includes two turbine wheels 52, 53 coupled to each other via a shaft 51. The turbine wheel 52 (an intake-side turbine wheel) is exposed to the intake air in the intake system 30, whereas the turbine wheel 53 (an exhaust-side turbine wheel) is exposed to the exhaust gas in the exhaust system 40. The turbocharger 50 thus constructed is operable to perform so-called supercharging to increase the pressure of the intake air by rotating the intake-side turbine wheel 52, utilizing the flow of the exhaust gas (exhaust gas pressure) to which the exhaust-side turbine wheel 53 is subjected.

In the intake system 30, the intake air that has been heated while being supercharged is forcedly cooled at an intercooler 31 provided in the turbocharger 50. A throttle valve 32 is provided downstream of the intercooler 31. The throttle valve 32 is an electronically controlled open-close valve capable of changing its opening amount continuously, and functions to adjust (decrease) the quantity of supply of the intake air by reducing the area of a flow path of the intake air under predetermined conditions.

In the engine 1, there is also provided an exhaust gas recirculation passage (an EGR passage) 60. The EGR passage 60 serves as a bypass to communicate portions upstream and downstream of the combustion chambers 20 (portions in the intake system 30 and the exhaust system 40). During operations of the engine 1, a portion of the exhaust gas is returned to the intake system 30 through the EGR passage 60 when appropriate. The EGR passage 60 is provided with an EGR valve 61 that is electronically controlled to be opened and closed continuously or steplessly and is thus capable of flexibly adjusting the quantity of the exhaust gas flowing in the EGR passage 60. The EGR passage 60 is also provided with an EGR cooler 62 serving to cool the exhaust gas passing through the EGR passage 60 while being recirculated.

Also, the catalyst casing 42 that houses a storage-reduction type NOx catalyst (which will be simply referred to as "catalyst") 41 is provided downstream of a portion of the exhaust system 40 at which the exhaust system 40 and the EGR passage 60 communicate. The catalyst 41 stored in the catalyst casing 42 includes (a) a support formed of, for example, alumina ($Al_2O_3$), (b) at least one element carried on the support and selected from alkali metal such as potassium (K), sodium (Na), lithium (Li) and cesium (Cs), alkali earth metal such as barium (Ba) and calcium (Ca), and rare earth metal such as lanthanum (La) and yttrium (Y), and (c) at least one noble metal such as platinum (Pt) also carried on the support.

The catalyst 41 is arranged to absorb NOx when much oxygen is present in the exhaust gas and to reduce NOx into $NO_2$ or NO and release it to the atmosphere when much reducing substance (e.g. unburned component of fuel (HC)) is present in the exhaust gas. The NOx that has been released after being reduced to $NO_2$ or NO immediately reacts with HC or CO contained in the exhaust gas to be further reduced to $N_2$. As a result of reducing $NO_2$ or NO, HC or CO is oxidized into $H_2O$ or $CO_2$. Accordingly, it is possible to purify the exhaust gas of HC, CO, and NOx by suitably adjusting the concentration of oxygen or HC component in the exhaust gas to be introduced into the catalyst casing 42 (catalyst 41).

Further, various sensors are installed in respective portions of the engine 1. Each of the sensors generates a signal indicative of an environmental condition of the corresponding portion or the operating state of the engine 1.

More specifically, a rail pressure sensor 70 generates a detection signal indicative of the pressure of the fuel accumulated in the common rail 12. A fuel pressure sensor 71 generates a detection signal indicative of the pressure (fuel pressure) PG of the fuel that passes through the addition fuel passage P2 and is to be introduced into the reductant addition valve 17 via the regulating valve 16. An airflow meter 72 is provided in a portion of the intake system 30 upstream of the throttle valve 32 and generates a detection signal indicative of the quantity (intake air quantity) Ga of the intake air. An air-fuel (A/F) sensor 73 is provided in a portion of the exhaust system 40 downstream of the catalyst casing 42 and generates a detection signal that continuously changes in accordance with the oxygen concentration in the exhaust gas. An exhaust gas temperature sensor 74 is also provided in a portion of the exhaust system 40 downstream of the catalyst casing 42, and generates a detection signal indicative of the exhaust temperature TEX of the exhaust gas. Also, a NOx sensor 75 is provided in a portion of the exhaust system 40 downstream of the catalyst 41, and generates a detection signal that continuously changes in accordance with the NOx concentration CNOx in the exhaust gas.

Furthermore, an accelerator position sensor 76 is attached to an accelerator pedal (not shown) and generates a detection signal indicative of the depression amount ACC of the accelerator pedal. A crank angle sensor 77 is adapted to generate a detection signal (pulse) each time an output shaft (a crankshaft) of the engine 1 rotates by a predetermined angle. Each of these sensors 70 to 77 is electrically connected to an electronic control unit (ECU) 80.

The ECU 80 includes a central processing unit (CPU) 81, a read-only memory (ROM) 82, a random access memory (RAM) 83, a backup RAM 84, a timer counter 85, and so on. These components 81 to 85, an external input circuit 86 including A/D converter, and an external output circuit 87 are interconnected with each other through a bidirectional bus 88, thus forming a logical calculation circuit.

The ECU 80 thus constructed is arranged to receive detection signals from the respective sensors via the external input circuit, and perform basic controls such as control of fuel injection of the engine 1. In addition, the ECU 80 performs various other controls related to the operating state of the engine 1, including a reductant addition control for determining the timing to add a reducing agent (e.g., fuel serving as a reducing agent) and the quantity of the reducing agent to be added.

In the embodiment, the emission control system of the engine 1 is constituted by the fuel supply system 10, the catalyst 41 disposed in the exhaust system 40, the ECU 80 that is operable to control the functions of the fuel supply system 10 and the catalyst 41, and others. As described above, the fuel supply system 10 functions to add fuel into the exhaust system 40 via the reductant addition valve 17 as well as to supply fuel into the respective cylinders via the fuel injection valves 13. Thus, the above-described reductant addition control is performed through the operations of the ECU 80, which generates command signals relating to the reductant addition control, and the other components constituting the emission control system.

Next, the basic principle and procedure of the reductant addition control by the emission control system of the embodiment will be described in detail.

In diesel engines, generally, the oxygen concentration in air-fuel mixtures to be burnt in combustion chambers is high in most of the operating regions of the engines.

Normally, the oxygen concentration in an air-fuel mixture before being burnt in the combustion chambers is directly reflected by the oxygen concentration in the exhaust gas. More specifically, the oxygen concentration in the air-fuel mixture decreases after combustion thereof by a degree corresponding to the quantity of oxygen used in the combustion. When the oxygen concentration (air-fuel ratio) in the air-fuel mixture is high, therefore, the oxygen concentration in the exhaust gas basically becomes high in a similar way (i.e., the quantity of the reducing agent in the exhaust gas decreases). As described above, the storage-reduction type NOx catalyst has a property of absorbing NOx when the oxygen concentration in the exhaust gas is high and of reducing NOx into $NO_2$ or NO and releasing the resulting NOx when the oxygen concentration in the exhaust gas is low (i.e., when the quantity of the reducing agent is large). The NOx catalyst therefore continues to absorb NOx as long as the oxygen concentration in the exhaust gas is high. However, the quantity of NOx that can be absorbed by the NOx catalyst is limited, as described above. In the case where the NOx catalyst has already absorbed NOx to the limit quantity, therefore, NOx in the exhaust gas is not absorbed by the NOx catalyst but passes through the catalyst casing as it is, which results in an increase in the NOx concentration on the downstream side of the catalyst 41.

In view of the above situation, in the engine 1 including the reductant addition valve 17, a fuel serving as a reducing agent is added to a portion of the exhaust system 40 upstream of the catalyst 41 via the reductant addition valve 17 at appropriate times, in order to temporarily increase the quantity of the reducing substance(s) (e.g. HC) in the exhaust gas. With the fuel thus added, NOx which has been absorbed in the catalyst 41 is reduced to $NO_2$ or NO and is released from the catalyst 41, whereby the NOx absorbing capacity of the catalyst 41 is recovered. At this time, the released $NO_2$ or NO is immediately reduced to $N_2$ through reaction with HC or CO, as described above.

In the meantime, the reducing agent (fuel) added into the exhaust system 40 exhibits different behaviors when moving in the exhaust system 40 down to the catalyst 41 and gives different effects on the catalyst 41, depending on the state of the reducing agent when added to the exhaust system 40. For example, if particles of the reducing agent sprayed into the exhaust system 40 via the reductant addition valve 17 have a particle size of less than 10 $\mu$m, the reducing agent added to the exhaust system 40 is quickly diffused in the exhaust gas while being transferred to the catalyst 41. Conversely, if the reducing agent sprayed into the exhaust system 40 via the reductant addition valve 17 consists of droplets each having a particle diameter of 10 $\mu$m or larger, thick mist (a fuel-rich atmosphere) is locally formed by the droplets in the exhaust gas, to be fed into the catalyst casing 42. Due to the relatively large diameter of the particles, a majority of the reducing agent immediately adheres to the surfaces of the catalyst 41 when it flows into the catalyst casing 42. Namely, the majority of the reducing agent added into the exhaust gas effectively acts on the catalyst 41 without merely passing through it. Thus, it is possible to reduce and remove NOx from the NOx catalyst by causing a minimum quantity of reducing agent to act on the NOx catalyst with high efficiency.

The emission control system of the embodiment is arranged to control the respective components including the fuel supply system 10, so that the reducing agent added to the exhaust system 40 via the reductant addition valve 17 forms a mist consisting of particles in the form of droplets each having a particle diameter between 50 $\mu$m and 100 $\mu$m.

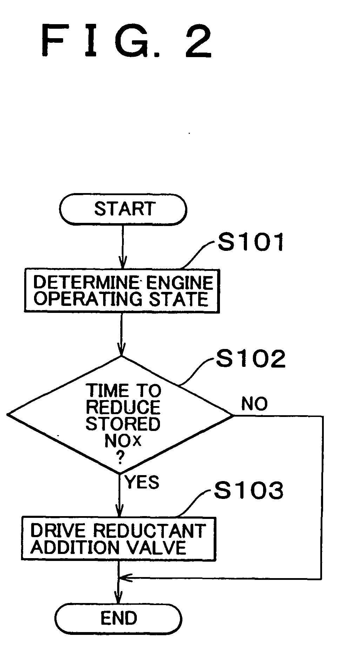

Referring next to the flowchart of Fig. 2, a process or routine of the reductant addition control performed by the emission control system of the embodiment will be described in detail.

Fig. 2 shows a reductant addition control routine that is executed to control the quantity and timing of addition of a reducing agent when it is supplied into the exhaust system 40. The ECU 80 starts this routine at the same time that the engine 1 starts, and thereafter repeatedly executes the routine at intervals of a predetermined time.

In the routine, the ECU 80 first determines in step S101 the operating states of the engine 1 by checking the records of the NOx concentration CNOx and the exhaust gas temperature TEX downstream of the catalyst 41, the engine speed NE, the depression amount ACC of the accelerator pedal, and so on.

The ECU 80 next determines in step S 102 whether the operating states of the engine 1 obtained in step S101 satisfy all of conditions for carrying out the addition of the reducing agent, including, for example, the following conditions (A1), (A2) and (A3).

(A1) The value indicated by the detection signal from the NOx sensor 75 has increased to be greater than a predetermined value. When this condition is satisfied, it means that the quantity of NOx stored in the catalyst 41 has exceeded a predetermined level and it is therefore necessary to release the stored NOx by reducing it.
(A2) The exhaust gas temperature TEX is higher than a predetermined level (e.g. 250 °C). This condition is provided for ensuring that the catalyst 41 has been sufficiently activated.
(A3) The operating state of the engine 1 is determined to be suitable for carrying out the addition of the reducing agent on the basis of the engine speed NE, the depression amount ACC of the accelerator pedal, and so on.

If the above conditions (A1) to (A3) are all satisfied, the ECU 80 then proceeds to step S 103. If any one of these conditions is not satisfied, conversely, the ECU 80 finishes the routine at once.

In step S103, the opening amount of the reductant addition valve 17 is adjusted so that a controlled amount of the reducing agent is added to the exhaust system 40.

Fuel addition quantity Q that is a total quantity of the reducing agent supplied to the exhaust system 40 via the reductant addition valve 17 can basically be defined as a function of the valve-open time T (micro second; ms) and the pressure PG of the fuel applied to the reductant addition valve 17 through the addition fuel passage P2 during the valve-open time T, as represented by the following expression (1).

$$Q = f\,(T,\,PG) \qquad\qquad (1)$$

Namely, the ECU 80 calculates the valve-open time T based on the pressure (fuel pressure) PG of the fuel that flows through the addition fuel passage P2 so that the amount of the fuel supplied to the exhaust system 40 becomes equal to the determined fuel addition quantity Q. Then, current is continuously or intermittently applied to the reductant addition valve 17 in predetermined timing, so that the valve 17 is controlled to be opened for the total time (valve-open time) T so as to add the fuel in a pattern determined as described above.

At this time, in the emission control system of the embodiment, the opening amount of the regulating valve 16 is adjusted (i.e., the fuel pressure PG is controlled) so as to form the reducing agent into a mist consisting of droplets each having a particle diameter of approximately 50 $\mu$m. When the particle diameter of the reducing agent in the form of droplets is to be increased, the opening amount of the regulating valve 16 is reduced so as to increase the pressure (i.e., the fuel pressure PG) of the reducing agent.

After step S103, the ECU 80 finishes the routine.

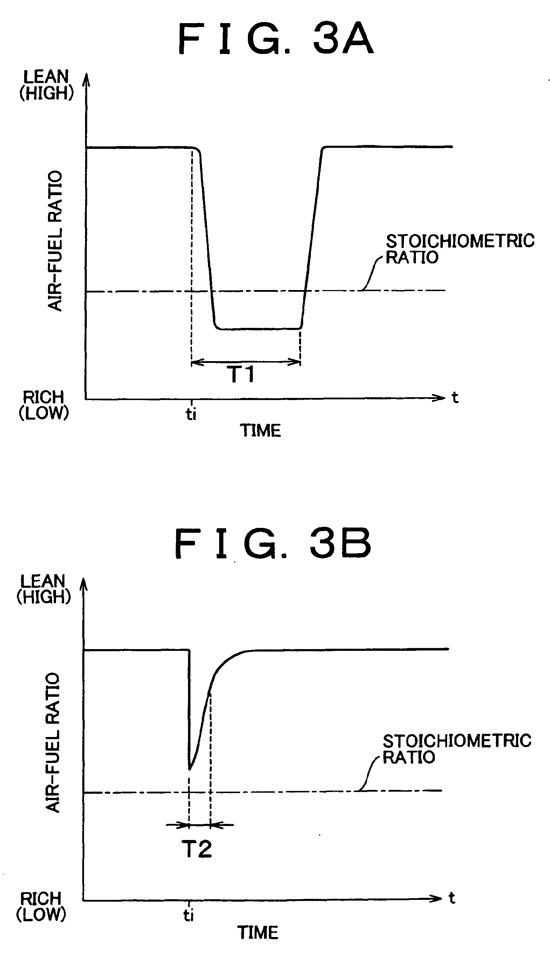

Figs. 3A and 3B are time charts showing changes in the air-fuel ratio with time when the reducing agent is added under conventional reductant addition control (Fig. 3A) and when the reducing agent is added under reductant addition control according to the embodiment (Fig. 3B). Here, the air-fuel ratio is calculated on the basis of an output signal from the A/F sensor 73 disposed downstream of the NOx catalyst, and the calculated air-fuel ratio is plotted on the same time axis in the time charts of Figs. 3A and 3B. In the time charts, "ti" on the time axis of each time chart represents the time to start the addition of the reducing agent. Meanwhile, the same quantity of the reducing agent is added per unit time in the control of the embodiment and the conventional control.

Generally, when a reducing agent is added into the exhaust system, the quantity of a reducing component(s) in the exhaust gas increases whereas the quantity of oxygen decreases. As a result, the air-fuel ratio determined based on the output signal from the A/F sensor 73 provided in the exhaust system (which will be simply referred to as "air-fuel ratio") temporarily decreases (or shifts to the fuel-rich side).

Here, if the reducing agent in the form of a mist consisting of small liquid particles each having a particle diameter smaller than 10 $\mu$m is added to reduce the stored NOx under the conventional reductant addition control, the addition of the reducing agent need be continued for the predetermined time T1, thereby to keep the air-fuel ratio lower than the stoichiometric air-fuel ratio (i.e., maintain a fuel-rich atmosphere) for a certain period of time (refer to Fig. 3A).

To the contrary, it has been confirmed by the present inventors that, if the reducing agent in the form of a mist consisting of droplets each having a relatively large particle diameter is added under the reductant addition control of the embodiment, the NOx stored in the catalyst is sufficiently effectively reduced even if the addition of the reducing agent continues only for a relatively short time (T2) with the air-fuel ratio being larger than the stoichiometric air-fuel ratio (refer to Fig. 3B).

Moreover, it is apparent from comparison between changes in the air-fuel ratio with time in the conventional reductant addition control (Fig. 3A) and those in the control of the embodiment (Fig. 3B) that the rate or speed of change of the air-fuel ratio toward the fuel-rich side from the time ti (reductant addition start point) under the control of the embodiment is higher than that under the conventional reductant addition control. In other words, the rate of change of the air-fuel ratio in response to the implementation of the reductant addition control is higher than that of the conventional control.

With the reductant addition control according to the embodiment, the reducing agent added into the exhaust system in the form of a mist consisting of droplets (relatively large particles) creates a local fuel-rich atmosphere in the exhaust gas, which atmosphere then directly and instantly act on the NOx catalyst, even though the apparent amount of reduction of the air-fuel ratio appears is small (i.e., the atmosphere around the local fuel-rich atmosphere is fuel-lean) under this control. Accordingly, it is possible to reduce and remove the stored NOx by causing a minimum quantity of the reducing agent to act on the NOx catalyst with high efficiency.

Although the local fuel-rich atmosphere is created in the exhaust gas under the reductant addition control of the embodiment as described above, the atmosphere around the local fuel-rich atmosphere is kept fuel-lean. If an oxidation catalyst that promotes oxidization of the reducing agent in a fuel-lean atmosphere is provided downstream of the NOx catalyst, it is possible to surely and easily remove a remaining portion of the reducing agent that has passed through the NOx catalyst.

In the meantime, the particle diameter of the droplets (reducing agent) used in the above-described reductant addition control is between 50 $\mu$m and 100 $\mu$m, and more preferably is 50 $\mu$m, though it differs depending upon the physical and chemical characteristics of the reducing agent used, the property and state of the exhaust gas, and the characteristics and state of the catalyst 41.

Second Embodiment

Next, an emission control system according to a second embodiment of the invention will be described. In the following, differences of the second embodiment from the first embodiment will be mainly described.

The emission control system of the second embodiment is used in an internal combustion engine which has substantially the same function and construction as those of the engine 1 in the first embodiment. Therefore, elements of the internal combustion engine in which the emission control system is used and elements of the emission control system, each having the same or equivalent function as that in the first embodiment, will be denoted by the same reference numerals and characters, and will not be described herein in detail.

The emission control system of the second embodiment is different from that of the first embodiment in that the particle diameter of droplets forming a mist of the reducing agent supplied through the reductant addition valve 17 is changed according to the midbed temperature of the catalyst 41 in the reductant addition control.

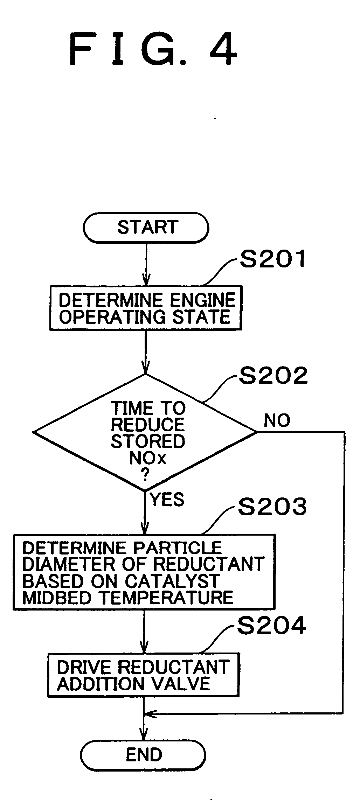

Fig. 4 is a flowchart showing "reductant addition control routine" which is implemented by the ECU 80 to control the quantity and time of addition of the reducing agent when the reducing agent is supplied to the exhaust system 40.

The processes in step S201 and step S202 in this routine are basically the same as or equivalent to those in step S101 and step S102 of the reductant addition control routine according to the first embodiment (Fig. 2), respectively. In step S201, however, for determining the operating state of the engine 1, the ECU 80 also checks the midbed temperature of the catalyst 41 as well as the records of the NOx concentration CNOx and the exhaust gas temperature TEX downstream of the catalyst 41, the engine speed NE, and the depression amount ACC of the accelerator pedal. The midbed temperature of the NOx catalyst can be actually measured by providing a temperature sensor in the catalyst casing 42, or can be estimated based on the exhaust gas temperature TEX with reference to other parameters such as the depression amount ACC of the accelerator pedal.

Next, if it is determined in step S202 that the conditions for carrying out the addition of the reducing agent are all satisfied, the ECU then determines in step S203 the particle diameter of droplets of the reducing agent to be added, on the basis of the midbed temperature of the catalyst 41 checked in step S201 as described above.

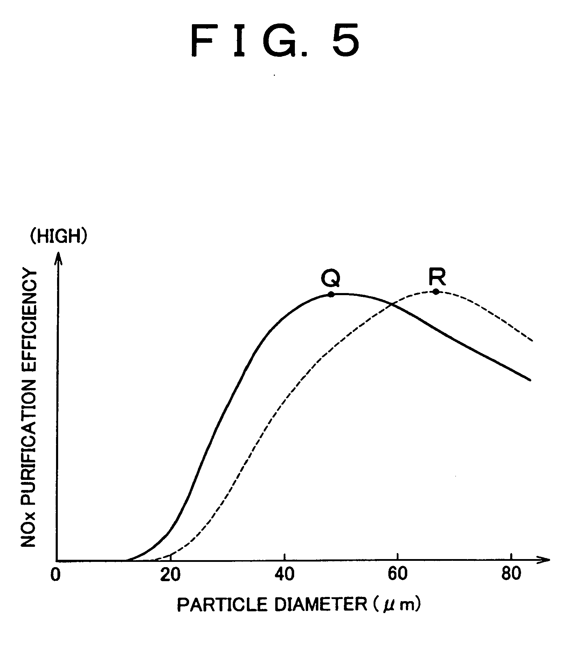

Fig. 5 is a graph showing a relationship between the particle diameter of droplets of the reducing agent constituting a mist and the NOx reduction efficiency (or NOx removal efficiency) when the mist consisting of the droplets is supplied to the exhaust system 40 to reduce and remove the NOx stored in the catalyst. In Fig. 5, the curve plotted by a solid line represents the relationship established when the midbed temperature of the catalyst 41 is relatively low (e.g. 250 °C), whereas the curve plotted by a dashed line represents the relationship established when the midbed temperature of the catalyst 41 is relatively high (e.g. 400 °C). As is apparent from Fig. 5, the particle diameter of the droplets that provides the optimum NOx removal efficiency differs depending on the midbed temperature of the catalyst 41 (refer to points Q and R in the graph of Fig. 5).

In the emission control system (ECU 80) of the embodiment, therefore, a map representing the relationship between the particle diameter of droplets (reducing agent) that provides the optimum NOx removal efficiency and the midbed temperature of the catalyst 41 is stored, for example, in the ROM 82. In step S203, the ECU 80 determines the particle diameter of the droplets of the reducing agent used in the current reductant addition control with reference to the map thus obtained.

Subsequently, the ECU 80 operates to drive the reductant addition valve 17 and the regulating valve 16 so as to supply a mist consisting of droplets of the reducing agent each having the diameter (determined in step S203) into the exhaust system 40 in step S204 in the same manner as step S103 of the reductant addition control routine of the first embodiment (Fig. 2).

After step S204, the ECU 80 finishes the routine.

As described above, when the emission control system of the embodiment reduces and removes the stored NOx by using the reducing agent in the form of droplets, the purification efficiency of the NOx catalyst is optimized based on the relationship between two dominant parameters (the particle diameter of droplets and the reaction temperature of the catalyst) which determine the purification efficiency of the NOx catalyst. It is thus possible to constantly ensure a high exhaust gas purification efficiency, which would be achieved through the use of the reducing agent in the form of droplets, even if a change occurs in an environmental condition (such as a temperature) that affects the function of the NOx catalyst. This arrangement is advantageous in an internal combustion engine in which a fuel-lean atmosphere is frequently burned in the engine and therefore the temperature of the exhaust gas frequently and largely changes. In this type of the engine, the emission control system of the second embodiment provides a significantly enhanced effect in terms of NOx removal due to addition of the reducing agent in the form of droplets, as compared to the first embodiment.

In the meantime, while the particle diameter of droplets (reducing agent) to be added via the reductant addition valve 17 is changed in accordance with the midbed temperature of the catalyst 41 in the second embodiment, the particle diameter may be changed in accordance with the exhaust gas temperature TEX instead of the midbed temperature of the catalyst 41, or with both the midbed temperature and the exhaust gas temperature TEX. Similarly to the first embodiment, the particle diameter of the droplets (reducing agent) may be increased as the exhaust gas temperature TEX increases.

Also, while a fuel (i.e., light oil) for a diesel engine is used as the reducing agent in the above-illustrated embodiments, other substance, such as gasoline or kerosine, may be used provided that it serves as a reducing component having a function of reducing NOx and is able to exist in the form of droplets in the exhaust gas.

In each of the illustrated embodiments, the emission control system is constructed such that a portion of the fuel delivered from the fuel tank by the supply pump 11 for supplying the fuel from the fuel tank to the common rail 12 is added into the exhaust system 40. However, the invention is not limited to this arrangement. For example, an independent supply system may be provided for supplying addition fuel from the fuel tank or other fuel (reductant) supply source.

Also, while the emission control system is used in the in-line four-cylinder diesel engine 1 as an internal combustion engine in each of the illustrated embodiments,, the emission control system of the invention may also be suitably employed in a gasoline engine capable of performing lean-burn combustion. Also, in addition to the in-line four-cylinder engine, the emission control system according to the invention may also be employed in an internal combustion engine with a different number of cylinders.

**Claims**

1. An emission control system for an internal combustion engine (1), including a NOx absorbing catalyst (41) disposed in an exhaust system (40) of the internal combustion engine (1) and having a property of promoting reactions for reducing NOx when a concentration of a reducing substance in an exhaust gas becomes high, and reductant adding means (14, 16, 17, P2) for adding a reducing agent to the exhaust gas flowing into the NOx absorbing catalyst (41) through the exhaust system, **characterized by** control means (80) for controlling the reductant adding means (14, 16, 17, P2) to add the reducing agent in the form of droplets to the exhaust gas, wherein the droplets of the reducing agent have a particle diameter in a range between 50 $\mu$m and 100 $\mu$m, and the reductant adding means (14, 16, 17, P2) being arranged in such a way that the droplets adhere to the surface of the NOx absorbing catalyst (41) when they flow into a catalyst casing (42).

2. The emission control system according to claim 1, wherein the droplets of the reducing agent have a particle diameter of 50 $\mu$m.

3. The emission control system according to claim 1, wherein the reducing agent is added under a fuel-lean atmosphere.

4. The emission control system according to any one of claims 1 to 3, wherein the reductant adding means (14, 16, 17, P2) comprises a reductant addition valve (17) through which the reducing agent is added to the exhaust gas flowing into the NOx absorbing catalyst (41), and wherein the control means (80) controls a valve-open time of the reductant addition valve (17) based on a pressure of the reducing agent applied to the reductant addition valve (17) so as to achieve addition of a required amount of the reducing agent.

5. The emission control system according to claim 4, wherein the control means (80) controls the pressure of the reducing agent, thereby to achieve a desired particle size of the droplets.

6. The emission control system according to claim 5, wherein the control means (80) reduces the pressure of the reducing agent so as to increase the particle size of the reducing agent in the form of the droplets.

7. The emission control system according to claim 5 or 6, wherein the reductant adding means (14, 16, 17, P2) comprises a regulating valve (16) disposed in a reductant passage between a fuel tank and the reductant addition valve (17), and wherein the control means (80) adjusts an opening amount of the regulating valve (16) to control the pressure of the reducing agent applied to the reductant addition valve, thereby to achieve the desired particle size of the droplets.

8. The emission control system according to any one of claims 1 to 7, wherein the control means (80) changes a particle diameter of the droplets of the reducing agent depending upon a temperature of the NOx absorbing (41) catalyst.

9. The emission control system according to claim 8, wherein the control means (80) increases the particle diameter of the droplets of the reducing agent as the temperature of the NOx absorbing (41) catalyst increases.

10. The emission control system according to any one of claims 1 to 7, wherein the control means (80) changes a particle diameter of the droplets of the reducing agent depending upon a temperature of the exhaust gas.

11. The emission control system according to claim 10, wherein the control means (80) increases the particle diameter of the droplets of the reducing agent as the temperature of the exhaust gas increases.

12. The emission control system according to any one of claims 1 to 11, wherein the internal combustion engine (1) comprises a diesel engine, and the reducing agent comprises light oil.

**Patentansprüche**

1. Emissionssteuerungssystem für eine Brennkraftmaschine (1), mit einem NOx-absorbierenden Katalysator (41), der in einem Abgassystem (40) der Brennkraftmaschine (1) angeordnet ist und eine Eigenschaft eines Förderns von Reaktionen zum Reduzieren von NOx aufweist, wenn eine Konzentration einer Reduziersubstanz in einem Abgas hoch wird, und einer Reduktionsmittelzugabeeinrichtung (14, 16, 17, P2) zum Zugeben eines Reduktionsmittels zu dem durch das Abgassystem in den NOx-absorbierenden Katalysator (41) strömenden Abgas, **gekennzeichnet durch**
eine Steuerungseinrichtung (80) zum Steuern der Reduktionsmittelzugabeeinrichtung (14, 16, 17, P2), um das Reduktionsmittel in der Form von Tropfen zu dem Abgas zuzugeben, wobei die Tropfen des Reduktionsmittels einen Partikeldurchmesser in einem Bereich zwischen 50 μm und 100 μm aufweisen, und wobei die Reduktionsmittelzugabeeinrichtung (14, 16, 17, P2) auf eine derartige Art und Weise angeordnet ist, dass die Tropfen an der Oberfläche des NOx-absorbierenden Katalysators (41) anhaften, wenn sie in ein Katalysatorgehäuse (42) strömen.

2. Emissionssteuerungssystem nach Anspruch 1, wobei die Tropfen des Reduktionsmittels einen Partikeldurchmesser von 50 μm haben.

3. Emissionssteuerungssystem nach Anspruch 1, wobei das Reduktionsmittel unter einer kraftstoffmageren Atmosphäre hinzugegeben wird.

4. Emissionssteuerungssystem nach einem der Ansprüche 1 bis 3, wobei die Reduktionsmittelzugabeeinrichtung (14, 16, 17, P2) ein Reduktionsmittelzugabeventil (17) aufweist, durch das das Reduktionsmittel zu dem in den NOx-absorbierenden Katalysator (41) strömenden Abgas zugegeben wird und wobei die Steuerungseinrichtung (80) eine Ventilöffnungszeit des Reduktionsmittelzugabeventils (17) basierend auf einem auf das Reduktionsmittelzugabeventil (17) aufgebrachten Druck des Reduktionsmittels steuert, um eine Zugabe einer benötigten Menge des Reduktionsmittels zu erreichen.

5. Emissionssteuerungssystem nach Anspruch 4, wobei die Steuerungseinrichtung (80) den Druck des Reduktionsmittels steuert, um **dadurch** eine gewünschte Partikelgröße der Tropfen zu erreichen.

6. Emissionssteuerungssystem nach Anspruch 5, wobei die Steuerungseinrichtung (80) den Druck des Reduktionsmittels verringert, um die Partikelgröße des Reduktionsmittels in der Form von Tropfen zu vergrößern.

7. Emissionssteuerungssystem nach Anspruch 5 oder 6, wobei die Reduktionsmittelzugabeeinrichtung (14, 16, 17, P2) ein Regulierventil (16) aufweist, das in einem Reduktionsmitteldurchgang zwischen einem Kraftstofftank und dem Reduktionsmittelzugabeventil (17) angeordnet ist, und wobei die Steuerungseinrichtung (80) einen Öffnungsbetrag des Regulierventils (16) einstellt, um den auf das Reduktionsmittelzugabeventil aufgebrachten Druck des Reduktionsmittels zu steuern, um **dadurch** die gewünschte Partikelgröße der Tropfen zu erhalten.

8. Emissionssteuerungssystem nach einem der Ansprüche 1 bis 7, wobei die Steuerungseinrichtung (80) einen Partikeldurchmesser der Tropfen des Reduktionsmittels abhängig von einer Temperatur des NOx-absorbierenden Katalysators (41) verändert.

9. Emissionssteuerungssystem nach Anspruch 8, wobei die Steuerungseinrichtung (80) den Partikeldurchmesser der Tropfen des Reduktionsmittels mit der Zunahme der Temperatur des NOx-absorbierenden Katalysators (41) erhöht.

10. Emissionssteuerungssystem nach einem der Ansprüche 1 bis 7, wobei die Steuerungseinrichtung (80) einen Partikeldurchmesser der Tropfen des Reduktionsmittels abhängig von einer Temperatur des Abgases verändert.

11. Emissionssteuerungssystem nach Anspruch 10, wobei die Steuerungseinrichtung (80) den Partikeldurchmesser der Tropfen des Reduktionsmittels mit der Zunahme der Temperatur des Abgases vergrößert.

12. Emissionssteuerungssystem nach einem der Ansprüche 1 bis 11, wobei die Brennkraftmaschine (1) eine Dieselbrennkraftmaschine aufweist, und wobei das Reduktionsmittel Leichtöl aufweist.

**EP 1 291 498 B1**

## Revendications

1. Système de commande d'émission pour un moteur à combustion interne (1), incluant un catalyseur d'absorption de NOx (41) disposé dans un système d'échappement (40) du moteur à combustion interne (1) et ayant une propriété favorisant des réactions pour réduire des NOx lorsqu'une concentration d'une substance réductrice dans un gaz d'échappement devient élevée, et un moyen d'ajout d'agent réducteur (14, 16, 17, P2) pour ajouter un agent réducteur au gaz d'échappement s'écoulant dans le catalyseur d'absorption de NOx (41) à travers le système d'échappement, **caractérisé par**
un moyen de commande (80) pour commander le moyen d'ajout d'agent réducteur (14, 16, 17, P2) pour ajouter l'agent réducteur sous la forme de gouttelettes au gaz d'échappement, dans lequel les gouttelettes de l'agent réducteur ont un diamètre de particule dans une gamme entre 50 $\mu$m et 100 $\mu$m, et le moyen d'ajout d'agent réducteur (14, 16, 17, P2) étant agencé d'une telle manière que les gouttelettes adhèrent à la surface du catalyseur d'absorption de NOx (41) lorsqu'elles s'écoulent dans une enveloppe de catalyseur (42).

2. Système de commande d'émission selon la revendication 1, dans lequel les gouttelettes de l'agent réducteur ont un diamètre de particule de 50 $\mu$m.

3. Système de commande d'émission selon la revendication 1, dans lequel l'agent réducteur est ajouté sous une atmosphère pauvre en carburant.

4. Système de commande d'émission selon l'une quelconque des revendications 1 à 3, dans lequel le moyen d'ajout d'agent réducteur (14, 16, 17, P2) comprend une soupape d'ajout d'agent réducteur (17) à travers laquelle l'agent réducteur est ajouté au gaz d'échappement s'écoulant dans le catalyseur d'absorption de NOx (41), et dans lequel le moyen de commande (80) commande un instant d'ouverture de soupape de la soupape d'ajout d'agent réducteur (17) sur la base d'une pression de l'agent réducteur appliquée à la soupape d'ajout d'agent réducteur (17) de manière à accomplir l'ajout d'une quantité requise de l'agent réducteur.

5. Système de commande d'émission selon la revendication 4, dans lequel le moyen de commande (80) commande la pression de l'agent réducteur, pour accomplir ainsi une dimension de particule voulue des gouttelettes.

6. Système de commande d'émission selon la revendication 5, dans lequel le moyen de commande (80) réduit la pression de l'agent réducteur de manière à augmenter la dimension de particule de l'agent réducteur sous la forme des gouttelettes.

7. Système de commande d'émission selon la revendication 5 ou 6, dans lequel le moyen d'ajout d'agent réducteur (14, 16, 17, P2) comprend une soupape de régulation (16) disposée dans un passage d'agent réducteur entre un réservoir de carburant et la soupape d'ajout d'agent réducteur (17), et dans lequel le moyen de commande (80) ajuste une quantité d'ouverture de la soupape de régulation (16) pour commander la pression de l'agent réducteur appliquée à la soupape d'ajout d'agent réducteur, pour accomplir ainsi la dimension de particule voulue des gouttelettes.

8. Système de commande d'émission selon l'une quelconque des revendications 1 à 7, dans lequel le moyen de commande (80) modifie un diamètre de particule des gouttelettes de l'agent réducteur en fonction d'une température du catalyseur d'absorption de NOx (41).

9. Système de commande d'émission selon la revendication 8, dans lequel le moyen de commande (80) augmente le diamètre de particule des gouttelettes de l'agent réducteur à mesure que la température du catalyseur d'absorption de NOx (41) augmente.

10. Système de commande d'émission selon l'une quelconque des revendications 1 à 7, dans lequel le moyen de commande (80) modifie un diamètre de particule des gouttelettes de l'agent réducteur en fonction d'une température du gaz d'échappement.

11. Système de commande d'émission selon la revendication 10, dans lequel le moyen de commande (80) augmente le diamètre de particule des gouttelettes de l'agent réducteur à mesure que la température du gaz d'échappement augmente.

12. Système de commande d'émission selon l'une quelconque des revendications 1 à 11, dans lequel le moteur à combustion interne (1) comprend un moteur diesel, et l'agent réducteur comprend une huile légère.

# FIG. 1

EP 1 291 498 B1

# F I G. 2

```
        ┌─────────────────┐
        │     START       │
        └─────────────────┘
                 │          ╭S101
                 ▼
        ┌─────────────────┐
        │DETERMINE ENGINE │
        │OPERATING STATE  │
        └─────────────────┘
                 │          ╭S102
                 ▼
              ╱────╲
            ╱TIME TO ╲
           ╱ REDUCE   ╲      NO
          ╱  STORED    ╲──────────┐
           ╲  NOx      ╱          │
            ╲   ?     ╱           │
              ╲────╱              │
             YES│      ╭S103      │
                ▼                 │
        ┌─────────────────┐       │
        │DRIVE REDUCTANT  │       │
        │ADDITION VALVE   │       │
        └─────────────────┘       │
                 │◄───────────────┘
                 ▼
        ┌─────────────────┐
        │      END        │
        └─────────────────┘
```

14

# FIG. 3A

LEAN
(HIGH)

AIR-FUEL RATIO

STOICHIOMETRIC
RATIO

T1

RICH
(LOW)

ti

TIME

t

# FIG. 3B

LEAN
(HIGH)

AIR-FUEL RATIO

STOICHIOMETRIC
RATIO

T2

RICH
(LOW)

ti

TIME

t

15

# FIG. 4

```
        ( START )
            │
            │              ┌─ S201
            ▼
   ┌─────────────────┐
   │ DETERMINE ENGINE│
   │ OPERATING STATE │
   └─────────────────┘
            │
            │                    ┌─ S202
            ▼
          ╱─────────╲
         ╱  TIME TO  ╲
        ╱   REDUCE    ╲    NO
        ╲   STORED    ╱──────────┐
         ╲   NOx     ╱           │
          ╲    ?    ╱            │
           ╲───────╱             │
            │                    │
            │ YES      ┌─ S203    │
            ▼                    │
   ┌──────────────────────┐     │
   │ DETERMINE PARTICLE   │     │
   │ DIAMETER OF REDUCTANT│     │
   │ BASED ON CATALYST    │     │
   │ MIDBED TEMPERATURE   │     │
   └──────────────────────┘     │
            │        ┌─ S204     │
            ▼                    │
   ┌──────────────────┐         │
   │ DRIVE REDUCTANT  │         │
   │ ADDITION VALVE   │         │
   └──────────────────┘         │
            │                    │
            │◄───────────────────┘
            ▼
         ( END )
```

# FIG. 5

# EP 1 291 498 B1

**REFERENCES CITED IN THE DESCRIPTION**

**Patent documents cited in the description**

- JP 2845056 B
- US 5965098 A